# EUROPÄISCHE PATENTSCHRIFT

(11) **EP 3 974 697 B1**
(45) Veröffentlichungstag und Bekanntmachung des Hinweises auf die Patenterteilung: **02.08.2023**
(21) Anmeldenummer: 21199828.1
(22) Anmeldetag: 29.09.2021
(51) Int. Cl.: F16L 41/08, F16L 47/24, F16L 23/028, F16L 23/16

(54) **KLIMAANLAGENROHRLEITUNG AUS KUNSTSTOFF MIT INTEGRIERTEM ANSCHLUSS AUS METALL**
PLASTIC AIR-CONDITIONING PIPE WITH INTEGRAL METAL FITTING
CONDUITE D'INSTALLATION DE CLIMATISATION EN MATIÈRE PLASTIQUE POURVUE DE RACCORD MÉTALLIQUE INTÉGRÉ

(30) Priorität: 29.09.2020 DE 102020212303
(43) Veröffentlichungstag der Anmeldung: 30.03.2022
(73) Patentinhaber: ContiTech Techno-Chemie GmbH, 61184 Karben (DE)
(72) Erfinder: Kreidner, Harald, 30419 Hannover (DE)
(74) Vertreter: Continental Corporation

(56) Entgegenhaltungen:
- EP-B1- 0 204 969
- EP-B1- 2 255 954
- WO-A1-96/14533
- US-A1- 2017 045 068
- US-B2- 9 587 772

## Beschreibung

Die Erfindung betrifft eine Klimaanlagenrohrleitung aus Kunststoff mit integriertem Anschluss aus Metall.

Bei der Gestaltung von Klimaanlagen, insbesondere im Automobilbau, kommen aufgrund ihrer hohen Druck- und Schwingfestigkeit sowie ihrer thermischen Beständigkeit meist Metallrohre zum Einsatz. Die Metallrohre weisen dabei oft Flansche auf, die teilweise genormt oder zum Anschluss weiterer Rohrleitungen vorgesehen und ebenfalls aus Metall ausgebildet sind. Dabei können wegen der meist sehr hohen Anforderungen an die Dichtheit bei Klimaleitungen die Rohre vorteilhaft mit Laserschweißung in an die Flansche angeschweißt werden.

Metallrohre haben jedoch ein relativ hohes Gewicht, unterliegen der Korrosion und sind meist kostenintensiv.

Bei einfacheren Anwendungen und geringeren Ansprüchen an die Dichtheit können auch Kunststoffleitungen zum Einsatz kommen, die dann jedoch entweder Anschlüsse auch aus Kunststoff aufweisen oder mittels Klebung an Anschlüssen aus Metall befestigt sind.

Derartige Rohrleitungen sind jedoch aufgrund der Gefahr des Kriechens der Kunststoff-Flansche an den Anschraubstellen und wegen der Versprödung von Klebeverbindungen bei Alterung als Klimaleitungen nicht geeignet.

EP0204969B1 offenbart einen in eine metallische Muffe eingepressten Rohrstutzen aus Kunststoff, bei der die Dichtheit der Verbindung durch eine auf der Muffeninnenseite aufgenommene Dichtung gewährleistet wird.

US 2017045068 A1 offenbart eine Rohrverbindung, bei der ein erstes Rohr eine endseitige Nut zur Aufnahme eines Rohrendes eines zweiten Rohres ausbildet, wobei die Nut mit einem Klebstoff oder einem Harz gefüllt ist.

EP 2255954 B1 offenbart ein Verfahren zur Herstellung einer geklebten Rohrverbindung, bei der der Klebstoff zwischen zwei ineinander eingeschobene Rohre eingespritzt wird.

WO 9614533 A1 offenbart eine Verbindung zwischen einem Kunststoffrohr und einem Metallrohr, bei der das Kunststoffrohrende über das Metallrohr umgespritzt wird.

Die US 9587772 B2 offenbart einen Hochdruckschlauch mit einer Innenschicht aus Kunststoff und einem metallischen Anschlussteil, wobei ein Spalt zwischen Innenschicht und Anschlussteil mit einem nicht-elastomeren Material gefüllt ist, das aus derselben Klasse von Thermoplasten oder Duroplasten besteht die Innenschicht.

Nach der DE 38 20 447 A1 oder der US 5 162 156 A sind Verfahren bekannt, sowohl Kunststoffe als auch Metalle mit Haftvermittlern zu beschichten, so dass ein Elastomer auf der jeweiligen Oberfläche festhaftend anvulkanisierbar ist.

Der Erfindung lag die Aufgabe zugrunde, eine Klimaanlagenrohrleitung aus Kunststoff mit integriertem Anschluss aus Metall der eingangs geschilderten Art zu schaffen, die insbesondere im Hinblick auf die Dichtheit der Rohr - Flansch - Verbindung für Klimaleitungen geeignet ist.

Diese Aufgabe wird dadurch gelöst, dass die Klimaanlagenrohrleitung aus Kunststoff an mindestens einem Endbereich mit einem Haftvermittler beschichtet ist und der Anschluss aus Metall mindestens eine zu der Klimaanlagenrohrleitung korrespondierende Bohrung aufweist, wobei die Bohrung einen Durchmesser aufweist, der so bemessen ist, dass bei in die Bohrung eingestecktem Endbereich der Klimaanlagenrohrleitung zwischen der Klimaanlagenrohrleitung und der Bohrung ein Ringspalt vorbestimmter Breite besteht und die Bohrung an ihrer der Klimaanlagenrohrleitung zugeordneten Oberfläche mit einem Haftvermittler beschichtet ist und der Ringspalt mit einem Elastomer gefüllt ist, das mittels des jeweiligen Haftvermittlers sowohl an der Klimaanlagenrohrleitung als auch an der Innenseite der Bohrung des Anschlusses aus Metall fest anvulkanisiert ist.

Dadurch, dass bei entsprechender Auswahl von Haftvermittler- und Elastomermaterialien sowohl zwischen der Klimaanlagenrohrleitung und dem Elastomer als auch zwischen der metallischen Oberfläche des Anschlusses und dem Elastomer eine sehr gute Verbindung erreichbar ist, ist mit einer derartigen Anordnung eine feste, dichte und schwingungsbeständige Verbindung der Klimaanlagenrohrleitung mit dem metallischen Anschluss erreichbar.

In einer Weiterbildung der Erfindung weist die Wand der Bohrung im Anschluss mindestens einen radial nach außen weisenden Hinterschnitt auf und weist die Klimaanlagenrohrleitung im Bereich des die Bohrung eingesteckten Endabschnitts eine Ausbauchung auf, die mit dem Hinterschnitt korrespondiert.

Durch den Hinterschnitt und die Ausbauchung ergibt sich zusätzlich zur Haftung zwischen dem Elastomer und der Kunststoffoberfläche der Klimaanlagenrohrleitung sowie der Metalloberfläche des Anschlusses auch ein Formschluss, der die Festigkeit der Verbindung verbessert.

In einer Weiterbildung der Erfindung ragt das in dem Spalt zwischen Klimaanlagenrohrleitung und Bohrung angeordnete Elastomer an dem in der Bohrung angeordneten Endabschnitt der Klimaanlagenrohrleitung über den Endabschnitt um ein vorbestimmtes Maß hinaus.

Diese Anordnung hat den Vorteil, dass das verbindende Elastomer gleichzeitig als Dichtung bei der Befestigung des Anschlusses an einem Aggregat dienen kann.

Anhand der Zeichnung wird ein Beispiel der Erfindung näher erläutert.

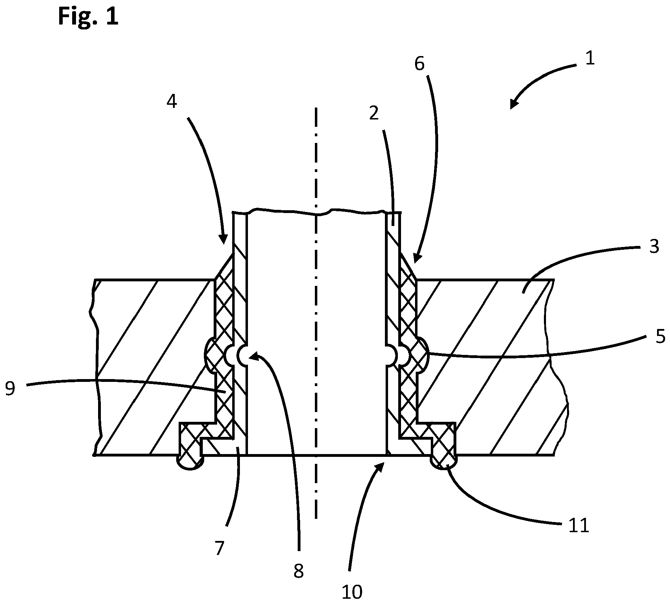

Die Fig. 1 zeigt einen Ausschnitt aus einer erfindungsgemäßen Klimaanlagenrohrleitung aus Kunststoff 1 mit integriertem Anschluss 3 aus Metall.

Die Anordnung weist eine Rohrleitung 2 aus Kunststoff und eine Anschlussplatte 3 aus Metall auf. Die Anschlussplatte 3 weist eine Bohrung 4 auf, die einen ringförmigen, radial nach außen gerichteten Hinterschnitt 5 aufweist.

Die Kunststoffrohrleitung 2 ist in die Bohrung 4 hineingesteckt, wobei ein Spalt 6 zwischen Kunststoffrohrleitung 2 und Anschlussplatte 3 ausgebildet ist. Die Kunststoffrohrleitung 2 weist einen Endflansch 7 und eine angestauchte Ausbauchung 8 auf, die mit dem Hinterschnitt 5 korrespondiert.

Sowohl die Innenseite der Bohrung 4 als auch die Kunststoffrohrleitung 2 sind im Bereich des Zusammenwirkens in hier nicht sichtbarer Weise jeweils mit einem Haftvermittler beschichtet. Ein Elastomer 9 ist in dem Spalt 6 angeordnet, füllt den Spalt 6 vollständig aus und ist sowohl mit der Kunststoffrohrleitung 2 als auch im Bereich der Bohrung 6 mit der Anschlussplatte 3 fest zusammenvulkanisiert.

Im Endbereich 10 der Kunststoffrohrleitung 2 ragt das Elastomer 9 über den Endflansch 7 der Kunststoffrohrleitung 2 hinaus und bildet einen Wulst 11.

Durch die Vulkanisation des Elastomer 9 ist eine feste, fluiddichte Verbindung zwischen der Kunststoffrohrleitung 2 und Anschlussplatte 3 gegeben, die sowohl relativ hohen Drücken als auch Schwingungen gewachsen ist. Dabei wird die Sicherheit der Verbindung durch das Zusammenwirken von Hinterschnitt 5 mit der Ausbauchung 8 und durch den Endflansch 7 noch verbessert.

Der herausragende Wulst 11 des Elastomers 9 kann beim Befestigen der Anschlussplatte 3 an ein hier nicht gezeigtes Aggregat als Dichtung wirken.

### Bezugszeichenliste

### (Teil der Beschreibung)

- 1: Klimaanlagenrohrleitung
- 2: Kunststoffrohrleitung
- 3: Anschlussplatte aus Metall
- 4: Bohrung in der Anschlussplatte 3
- 5: Hinterschnitt in der Bohrung 4
- 6: Spalt zwischen der Kunststoffrohrleitung 2 und Anschlussplatte 3
- 7: Endflansch der Kunststoffrohrleitung 2
- 8: Ausbauchung der Kunststoffrohrleitung 2
- 9: Elastomer
- 10: Endbereich der Kunststoffrohrleitung 2
- 11: Wulst

## Patentansprüche

1. Klimaanlagenrohrleitung (1, 2) aus Kunststoff mit integriertem Anschluss (3) aus Metall, wobei der Anschluss (3) aus Metall mindestens eine zu der Klimaanlagenrohrleitung (1, 2) korrespondierende Bohrung (4) aufweist, wobei die Bohrung (4) einen Durchmesser aufweist, der so bemessen ist, dass bei in die Bohrung (4) eingestecktem Endbereich (10) der Klimaanlagenrohrleitung (1, 2) zwischen der Klimaanlagenrohrleitung (1, 2) und der Bohrung (4) ein Ringspalt (6) vorbestimmter Breite besteht und die Bohrung (4) an ihrer der Klimaanlagenrohrleitung (1, 2) zugeordneten Oberfläche mit einem Haftvermittler beschichtet ist, **dadurch gekennzeichnet, dass** die Klimaanlagenrohrleitung (1, 2) aus Kunststoff an mindestens einem Endbereich (10) mit einem Haftvermittler beschichtet ist und der Ringspalt (6) mit einem Elastomer (9) gefüllt ist, das mittels des jeweiligen Haftvermittlers sowohl an der Klimaanlagenrohrleitung (1, 2) als auch an der Innenseite der Bohrung (4) des Anschlusses (3) aus Metall fest anvulkanisiert ist.

2. Klimaanlagenrohrleitung (1, 2) nach Anspruch 1, **dadurch gekennzeichnet, dass** die Wand der Bohrung (4) im Anschluss (3) mindestens einen radial nach außen weisenden Hinterschnitt (5) aufweist und die Klimaanlagenrohrleitung (1, 2) im Bereich des in die Bohrung (4) eingesteckten Endabschnitts (10) eine Ausbauchung (8) aufweist, die mit dem Hinterschnitt (5) korrespondiert.

3. Klimaanlagenrohrleitung (1, 2) nach Anspruch 1 oder 2, **dadurch gekennzeichnet, dass** das in dem Spalt (6) zwischen Klimaanlagenrohrleitung (1, 2) und Bohrung (4) angeordnete Elastomer (9) an dem in der Bohrung (4) angeordneten Endabschnitt (10) der Klimaanlagenrohrleitung (1, 2) über den Endabschnitt (7, 10) um ein vorbestimmtes Maß hinausragt.

## Claims

1. Air conditioning system pipeline (1, 2) of plastic with an integrated connection (3) of metal, wherein the connection (3) of metal comprises at least one bore (4) corresponding to the air conditioning system pipeline (1, 2), wherein the bore (4) has a diameter which is dimensioned such that, when the end region (10) of the air conditioning system pipeline (1, 2) is inserted in the bore (4), there is an annular gap (6) of predetermined width between the air conditioning system pipeline (1, 2) and the bore (4), and the bore (4) is coated with an adhesion promoter on its surface assigned to the air conditioning system pipeline (1, 2), **characterized in that** the air conditioning system pipeline (1, 2) of plastic is coated with an adhesion promoter in at least one end region (10) and the annular gap (6) is filled with an elastomer (9), which is fixedly vulcanized both on the air conditioning system pipeline (1, 2) and on the inner side of the bore (4) of the connection (3) of metal by means of the respective adhesion promoter.

2. Air conditioning system pipeline (1, 2) according to Claim 1, **characterized in that** the wall of the bore (4) in the connection (3) has at least one radially outwardly pointing undercut (5) and the air conditioning system pipeline (1, 2) in the region of the end portion (10) inserted in the bore (4) has a bulge (8) corresponding to the undercut (5).

3. Air conditioning system pipeline (1, 2) according to Claim 1 or 2, **characterized in that**, at the end portion (10) of the air conditioning system pipeline (1, 2) that is arranged in the bore (4), the elastomer (9) arranged in the gap (6) between the air conditioning system pipeline (1, 2) and the bore (4) protrudes beyond the end portion (7, 10) to a predetermined extent.

## Revendications

1. Canalisation d'installation de climatisation **(1, 2)** en matière synthétique comprenant un raccord intégré **(3)** en métal, le **raccord (3)** en métal comportant au moins un alésage **(4)** correspondant à la canalisation d'installation de climatisation **(1, 2),** l'alésage **(4)** présentant un diamètre qui est dimensionné de manière à ménager un espace annulaire **(6)** de largeur prédéterminée entre la canalisation d'installation de climatisation **(1, 2)** et l'alésage **(4),** et à revêtir l'alésage **(4)** d'un promoteur d'adhérence sur sa surface associée à la canalisation d'installation de climatisation **(1, 2),** lorsque la région d'extrémité **(10)** la canalisation d'installation de climatisation **(1, 2)** est insérée dans l'alésage (4), **caractérisé en ce que** la canalisation d'installation de climatisation **(1, 2)** en matière synthétique est revêtue d'un promoteur d'adhérence sur au moins une région d'extrémité **(10)** et l'espace annulaire **(6)** est rempli d'un élastomère **(9)** qui est solidement vulcanisé, au moyen du promoteur d'adhérence, aussi bien à la canalisation d'installation de climatisation **(1, 2)** qu'au côté intérieur de l'alésage (4) du raccord (3) en métal.

2. Canalisation d'installation de climatisation (1, 2) selon la revendication 1, **caractérisée en ce que** la paroi de l'alésage (4) du raccord (3) comporte au moins une contre-dépouille (5) dirigée radialement vers l'extérieur et la canalisation d'installation de climatisation (1, 2) comporte, dans la région de la portion d'extrémité (10) insérée dans l'alésage (4), un renflement (8) qui correspond à la contre-dépouille (5).

3. Canalisation d'installation de climatisation (1, 2) selon la revendication 1 ou 2, **caractérisé en ce que**, au niveau d'une portion d'extrémité (10), disposée dans l'alésage (4), de la canalisation d'installation de climatisation (1, 2), l'élastomère (9), disposé dans l'espace (6) ménagé entre la canalisation d'installation de climatisation (1, 2) et l'alésage (4), fait saillie de la portion d'extrémité (7, 10) d'une quantité prédéterminée.
